# EUROPEAN PATENT APPLICATION

(11) **EP 4 541 856 A1**
(43) Date of publication of application: **23.04.2025**
(21) Application number: 23842277.8
(22) Date of filing: 17.07.2023
(51) Int. Cl.: C08L 77/00, C08L 67/00, C08L 75/00, C08L 81/06, C08K 5/51

(54) **THERMOPLASTIC RESIN COMPOSITION, PROTECTIVE MATERIAL, AND FIBER OPTIC CABLE**

(30) Priority: 21.07.2022 CN 202210869333
(71) Applicant: Huawei Technologies Co., Ltd., Shenzhen, Guangdong 518129 (CN)
(72) Inventor: WU, Bo, Shenzhen, Guangdong 518129 (CN); PAN, Wenqian, Shenzhen, Guangdong 518129 (CN); JI, Zhongyuan, Shenzhen, Guangdong 518129 (CN)
(74) Representative: Pfenning, Meinig & Partner mbB
(86) International application number: PCT/CN2023/107777
(87) International publication number: WO 2024/017214

(57) **Abstract**

This application provides a thermoplastic resin composition, where the thermoplastic resin composition includes the following components in weight percentage: 72% to 85% of transparent thermoplastic resin, 10% to 20% of phosphate ester flame retardant, 1% to 8% of nano flame retardant, and 0.1% to 2% of auxiliary. This application further provides a protective material prepared by using the thermoplastic resin composition and an optical cable using the protective material. A halogen-free composite flame retardant formed by compounding the phosphate ester flame retardant and the nano flame retardant in the thermoplastic resin composition in this application has good compatibility with the transparent thermoplastic resin, and does not affect a light transmittance of the transparent thermoplastic resin, so that the protective material has a good halogen-free flame-retardant effect, high transparency, high mechanical performance, and the like.

## Description

### CROSS-REFERENCE TO RELATED APPLICATIONS

This application claims priority to Chinese Patent Application No. 202210869333.2, filed with the China National Intellectual Property Administration on July 21, 2022 and entitled "THERMOPLASTIC RESIN COMPOSITION, PROTECTIVE MATERIAL, AND OPTICAL CABLE", which is incorporated herein by reference in its entirety.

### TECHNICAL FIELD

This application relates to a halogen-free flame-retardant transparent thermoplastic resin composition, a protective material prepared by using the thermoplastic resin composition, and an optical cable using the protective material.

### BACKGROUND

In the field of optical communication, an optical cable is a communication line for implementing stable transmission of an optical signal, and usually is a cable formed by an optical fiber, a jacket material, a reinforcing member material, a water blocking material, and the like through a specific process. Optical cables may be classified into an outdoor optical cable, a drop optical cable, and an indoor optical cable according to usage scenarios. The outdoor optical cable is mainly used in a backbone transmission network and a cable transmission network, and can be constructed in manners such as direct burial, pipeline, aerial, underwater layout, and the like. In addition, the outdoor optical cable has features such as excellent mechanical performance, good tensile and pressure resistance, good chemical corrosion resistance, excellent aging resistance, good environmental stability, and long service life. The indoor optical cable is an optical cable used for connection and communication between a communication device and a terminal device inside a building, and includes a polymer jacket material and an optical fiber. Generally, a jacket layer of the indoor optical cable is weak, the tensile and pressure resistance of the indoor optical cable is poor, and the aging resistance and the environmental stability are not as good as the outdoor optical cable and the drop optical cable. In comparison, the indoor optical cable has higher requirements on construction, aesthetics, and flame-retardant performance. The drop optical cable is a key component for implementing fiber to the home (Fiber to the home, FTTH). In other words, an optical cable from an optical network distribution node to the building may be accessed to a user's home through the pipeline or aerial manner. A section of the drop optical cable is outdoors and another section is inside the building. Therefore, the drop optical cable needs to have good aging resistance and the environmental stability as well as good flame-retardant performance.

With development of technologies, the user has a higher requirement on network quality and a network speed. Fiber to the room (Fiber to the room, FTTR) is a new coverage mode for a home network. Based on fiber to the building (FTTB) in the 10 Mbit/s era and the FTTH in the 100 Mbit/s era, the indoor optical cable is routed to each room of the user, so that a speed of a gigabit optical fiber can be reached in each room. Therefore, an optical cable used in the FTTR needs to have good aging resistance, environmental stability, and flame-retardant performance of the drop optical cable. In addition, the optical cable used in the FTTR needs to be highly invisible to satisfy the aesthetics of indoor cabling and not damage a decoration style. However, an optical cable commonly used in the FTTR currently can hardly meet the requirements for good aging resistance, environmental stability, flame-retardant performance, and invisibility.

### SUMMARY

A first aspect of embodiments of this application provides a thermoplastic resin composition, where the thermoplastic resin composition includes the following components in weight percentage:

| | |
|---|---|
| a transparent thermoplastic resin | 72% to 85%; |
| a phosphate ester flame retardant | 10% to 20%; |
| a nano flame retardant | 1% to 8%; and |
| an auxiliary | 0.1% to 2%. |

The transparent thermoplastic resin in the thermoplastic resin composition in this application has high heat resistance, mechanical performance, and transparency. The phosphate ester flame retardant has good compatibility with the transparent thermoplastic resin (especially a transparent polyamide elastomer), has small impact on the transparency of the thermoplastic resin, and is beneficial to flame retardancy of a product (for example, an invisible optical cable) that has a high requirement on the transparency. The phosphate ester flame retardant contains an acid source, a gas source, and a carbon source, and has a good flame-retardant effect. The nano flame retardant has a small particle size, good dispersibility in the transparent thermoplastic resin, and small impact on a light transmittance of the transparent thermoplastic resin when an added amount is appropriate. A halogen-free composite flame retardant formed by compounding the phosphate ester flame retardant with the nano flame retardant has good compatibility with the transparent thermoplastic resin, and does not affect the light transmittance of the transparent thermoplastic resin when ensuring excellent flame-retardant performance of the transparent thermoplastic resin. A protective material prepared by using the thermoplastic resin composition can pass the V-0 level in vertical burning (UL-94, 1.5 mm to 2 mm thick sample strip), and when a thickness of the protective material is within a range of 0.2 mm to 0.5 mm, the light transmittance is greater than or equal to 50%, which can meet a use requirement of a product that has a requirement on the light transmittance. In addition, adding of the nano flame retardant can further reduce an amount of used phosphate ester flame retardant, thereby reducing acidity of the resin composition, so that a risk of hydrolysis of the transparent thermoplastic resin in a high temperature and high humidity condition can be reduced, and hydrolysis resistance of the protective material can be improved. Therefore, the protective material prepared by using the thermoplastic resin composition has a good halogen-free flame-retardant effect and high heat resistance, hydrolysis resistance, mechanical performance, and transparency.

With reference to the first aspect, in some embodiments, the transparent thermoplastic resin includes at least one of a transparent polyamide-type thermoplastic elastomer, a transparent polyurethane elastomer, a transparent thermoplastic polyester elastomer, and transparent polyethersulfone.

The foregoing types of the transparent thermoplastic resin have good thermal stability, mechanical performance, dimensional stability, transparency, and the like. Therefore, the protective material prepared by using the thermoplastic resin composition has high thermal stability, mechanical performance, dimensional stability, and excellent transparency, and the like.

With reference to the first aspect, in some embodiments, the transparent thermoplastic resin is the transparent polyamide elastomer.

The transparent polyamide elastomer is a polyamide compound that includes a polyether or polyester chain segment and whose molecular chain includes a chain segment of six or twelve consecutive carbon atoms. The transparent polyamide elastomer has good thermal stability, mechanical performance, dimensional stability, transparency, and the like, and is especially suitable for a protective material used for a product (for example, the invisible optical cable) that has a high requirement on the transparency.

With reference to the first aspect, in some embodiments, the phosphate ester flame retardant includes at least one of bicyclic phosphate, beta-methyl vinyl phosphate, cresyl diphenyl phosphate, bisphenol-A bis(diphenyl phosphate), triethyl phosphate, and triphenyl phosphate.

With reference to the first aspect, in some embodiments, the nano flame retardant includes a nano-organophosphate salt flame retardant.

With reference to the first aspect, in some embodiments, the organophosphate salt flame retardant includes at least one of aluminum diethyl phosphinate, aluminum methylethyl phosphinate, and aluminum dimethyl phosphinate.

By adding an organic hypophosphite salt nano-flame retardant and the phosphate ester flame retardant for use in compounding, the flame-retardant effect of the thermoplastic resin composition can be improved. In addition, an organic hypophosphite salt flame retardant can form a glass-like cover layer or a stable foam cover layer at a high temperature, which can increase a total quantity of isolation substances formed during combustion, thereby further improving the flame-retardant effect. In addition, an average particle size of the organic hypophosphite salt flame retardant is of nano-scale, and the dispersibility in the thermoplastic resin composition is good, thereby improving mechanical performance of the protective material formed by the thermoplastic resin composition. However, an excessively large added amount of the nano flame retardant affects the transparency of the thermoplastic resin composition, and an excessively small added amount of the nano flame retardant cannot further improve the flame-retardant effect. Therefore, in this application, the nano flame retardant with a weight percentage of 1% to 8% is added. This can not only ensure the transparency of the protective material, but also further improve a halogen-free flame-retardant effect and the mechanical performance of the protective material.

A second aspect of embodiments of this application provides a protective material, where the protective material is prepared by heating and mixing the thermoplastic resin composition according to the first aspect in embodiments of this application.

When a thickness of the protective material prepared by using the foregoing halogen-free flame-retardant transparent thermoplastic resin composition is within a range of 0.2 mm to 0.5 mm, a light transmittance is greater than or equal to 50%, and a requirement of a protective material such as an invisible optical cable on the light transmittance can be met. A tensile breaking strength is greater than or equal to 17 MPa, elongation at break is 100% to 600%, and the protective material has high mechanical strength. Based on an ISO 868 standard, Shore hardness can reach 30 D to 70 D by using different transparent thermoplastic resins. The protective material can pass the V-0 level in vertical burning (UL-94, 1.5 mm to 2 mm thick sample strip), and an optical cable using the protective material can pass a flame-retardant test in vertical burning IEC 60332-1-2.

With reference to the second aspect, in some embodiments, a heating temperature is 190°C to 250°C.

A high melting point (up to 215°C to 225°C) of the protective material prepared by using the foregoing thermoplastic resin composition can meet a requirement of operating at a high temperature (generally about 180°C).

With reference to the second aspect, in some embodiments, when the thickness of the protective material is in a range of 0.2 mm to 0.5 mm, the light transmittance is greater than or equal to 50%. The Shore hardness of the protective material is 30 D to 70 D, the tensile breaking strength of the protective material is greater than or equal to 17 MPa, and the elongation at break is 100% to 600%.

A third aspect of embodiments of this application provides an optical cable, where the optical cable includes a fiber core and a protective layer covering an outer side of the fiber core, and the protective layer is prepared by using the protective material according to the second aspect in embodiments of this application.

The optical cable in this application has a good halogen-free flame-retardant effect, good transparency, excellent tensile and pressure resistance, and a tensile breaking force over 150 N. The optical cable is compatible with both an exposed cabling mode and a concealed cabling mode. The optical cable has features of invisibility and aesthetics when using exposed cabling, and has a low friction force when cabled through a pipe. The optical cable has a good halogen-free flame-retardant effect and can pass the flame-retardant test in vertical burning IEC 60332-1-2. In addition, an increase of the flame retardant in the protective material does not affect the transparency of the thermoplastic resin, so that a use requirement of an invisible optical cable used in FTTR can be met. A melting point of a halogen-free flame-retardant protective material used for the protective layer is higher than 200°C. Therefore, the optical cable is easy to operate in a temperature higher than 180°C subsequently.

With reference to the third aspect, in some embodiments, the optical cable further includes an adhesive layer covering an outer side of the protective layer.

The melting point of the halogen-free flame-retardant protective material used for the protective layer is higher than 200°C. Therefore, the optical cable is easy to be reprocessed at a high temperature higher than 180°C to form an optical cable with an adhesive layer subsequently. The formed optical cable with the adhesive layer is easy for cabling, and the optical cable can be fixed without additional nails, adhesives, or the like.

With reference to the third aspect, in some embodiments, a volume of the protective layer accounts for 40% to 80% of a total volume of the optical cable.

A proportion of the protective layer in the optical cable plays a key role in the flame-retardant effect of the entire optical cable. When the volume of the protective layer accounts for 40% to 80% of the total volume of the optical cable, a good flame-retardant effect can be achieved on the entire optical cable, and a flame-retardant test in vertical burning IEC 60332-1-2 is passed.

With reference to the third aspect, in some embodiments, the optical cable further includes at least one reinforcing member, and each reinforcing member is embedded in the protective layer and is isolated from the fiber core.

By embedding the reinforcing member into the protective layer, a tensile breaking force of the optical cable can be improved.

With reference to the third aspect, in some embodiments, the optical cable includes at least two reinforcing members, and the at least two reinforcing members are disposed on two opposite sides of the fiber core.

By disposing the reinforcing members on the two opposite sides of the fiber core, forces on the two opposite sides of the fiber core can be more even, thereby improving the tensile breaking force of the optical cable.

With reference to the third aspect, in some embodiments, the reinforcing member is a glass fiber, and a diameter of the glass fiber ranges from 100 µm to 300 µm.

As the reinforcing member in the optical cable, the glass fiber is small in size and has good transparency, and does not affect an overall transmittance of the optical cable.

With reference to the third aspect, in some embodiments, the tensile breaking force of the optical cable is greater than or equal to 150 N.

### BRIEF DESCRIPTION OF DRAWINGS

FIG. 1 is a schematic diagram of a structure of an optical cable according to an embodiment of this application; and
FIG. 2 is a schematic diagram of a structure of an optical cable according to another embodiment of this application.

### Descriptions of reference signs of main components:

| | |
|---|---|
| Optical cables | 100, 200 |
| Fiber core | 10 |
| Protective layer | 20 |
| Reinforcing member | 30 |
| Adhesive layer | 40 |

### DESCRIPTION OF EMBODIMENTS

The following describes embodiments of this application with reference to the accompanying drawings in embodiments of this application. Unless otherwise specified, a data range in this application should include end values.

An invisible optical cable is usually a round cable with a diameter of 0.9 mm or 1.2 mm, or a rectangular cable with a length and a width both less than 2 mm. The optical cable includes a fiber core, a protective layer, and an adhesive layer from inside to outside. Both the protective layer and the adhesive layer in the invisible optical cable need to be transparent. In addition, the adhesive layer needs to have excellent heat resistance, mechanical performance, flame-retardant performance, and the like due to a special application scenario requirement of an optical cable used in fiber to the room (Fiber to the room, FTTR).

The adhesive layer of an existing invisible optical cable used in the FTTR is usually transparent polyvinyl chloride (PVC), thermoplastic polyurethane (TPU), nylon (PA), or the like. It is found through research that an invisible optical cable prepared by using the PVC has good transparency and flame-retardant performance, but the PVC has poor heat resistance and mechanical performance, and especially has low tensile breaking strength, and is prone to fiber cut during construction. In addition, the PVC contains toxic halogen, and the like, which significantly limits an application scope thereof. An invisible optical cable prepared by using the TPU has poor mechanical performance and yellowing resistance, and is prone to creep and is usually not flame retardant. Polyamide used as the adhesive layer of the invisible optical cable is mainly transparent polyamide (such as PA12 and PA612). The transparent polyamide, such as PA12 and PA612, has advantages such as good heat resistance, excellent mechanical performance, a low friction coefficient, high dimensional stability, and good transparency, and is commonly used as an invisible optical cable material. However, the transparent polyamide, such as PA12 and PA612, has poor flame-retardant performance and cannot meet a requirement of the optical cable used in the FTTR.

To resolve at least one of the foregoing problems, embodiments of this application provide a protective material having good heat resistance, excellent mechanical performance, a low friction coefficient, high dimensional stability, good transparency, and a good halogen-free flame-retardant effect. The protective material is prepared by using a thermoplastic resin composition, and may be used as a material of a protective layer of an optical cable used in the FTTR. However, this does not constitute a limitation. Each component of the thermoplastic resin composition of the protective material is optimized and selected, so that the protective material has the foregoing excellent comprehensive performance.

The halogen-free flame-retardant thermoplastic resin includes the following components in weight percentage:

| | |
|---|---|
| a transparent thermoplastic resin | 72% to 85%; |
| a phosphate ester flame retardant | 10% to 20%; |
| a nano flame retardant | 1% to 8%; and |
| an auxiliary | 0.1% to 2%. |

The phosphate ester flame retardant and the nano flame retardant are compounded to form a halogen-free composite flame retardant.

The transparent thermoplastic resin includes at least one of a transparent polyamide-type thermoplastic resin, a transparent polyurethane elastomer (TPU), a transparent thermoplastic polyester elastomer (TPEE), and transparent polyethersulfone (PES). The transparent polyamide-type thermoplastic resin includes at least one of a transparent polyamide elastomer (TPAE), nylon 12 (PA12), nylon (PA612), and nylon (PA1212). A weight percentage of the transparent thermoplastic resin is further 70% to 80%, where a mass fraction of the transparent thermoplastic resin is typically but not limited to 72%, 74%, 75%, 80%, 83%, or 85%. The transparent thermoplastic resin has good thermal stability, mechanical performance, dimensional stability, transparency, and the like, so that the protective material prepared by using the thermoplastic resin composition has good thermal stability, mechanical performance, dimensional stability, transparency, and the like. In particular, a melting point of the thermoplastic resin composition obtained by combining a plurality of resins is moderate, and is approximately 215°C to 225°C (at peak). The melting point is not excessively high. This facilitates subsequent processing and molding of the optical cable, reduces a risk of fiber cut of the optical cable, and improves quality of the optical cable. In addition, the melting point is not excessively low, and the thermal stability of the protective material is good. This facilitates subsequent operations of the optical cable at a high temperature (for example, about 180°C).

In some embodiments, the transparent thermoplastic resin is the transparent polyamide elastomer. The transparent polyamide elastomer is a polyamide compound that includes a polyether or polyester chain segment and whose molecular chain includes a chain segment of six or twelve consecutive carbon atoms. The transparent polyamide elastomer has good thermal stability, mechanical performance, dimensional stability, transparency, and the like, and is especially suitable for a protective material used for a product (for example, an invisible optical cable) that has a high requirement on the transparency.

Because the transparent thermoplastic resin is easy to burn, to meet a flame-retardant requirement of an optical cable used in FTTR, in this application, the halogen-free composite flame retardant is added to the transparent thermoplastic resin, and a thermoplastic resin composition having good halogen-free flame-retardant performance is prepared without affecting comprehensive performance of the thermoplastic resin, especially transparency. A total weight percentage of added halogen-free composite flame retardant is 11% to 28%. In this application, when a small quantity of the halogen-free composite flame retardant is added, a flame-retardant effect of the transparent thermoplastic resin can be effectively improved, so that a protective material (1.5 mm to 2 mm thick sample strip) prepared by using the thermoplastic resin composition can pass the V-0 level in vertical burning (UL-94), and an optical cable using the protective material can pass a flame retardant test of vertical burning IEC 60332-1-2, to further meet a requirement of the flame-retardant performance of the optical cable used in the FTTR.

In some embodiments, the phosphate ester flame retardant has good compatibility with the transparent thermoplastic resin (especially the transparent polyamide elastomer), has small impact on transparency of the thermoplastic resin, and is beneficial to flame retardant of a product (for example, an invisible optical cable) that has a high requirement on the transparency. The phosphate ester flame retardant contains an acid source, a gas source, and a carbon source, and has a good flame-retardant effect. Specifically, the phosphate ester flame retardant may be at least one of bicyclic phosphate, beta-methyl vinyl phosphate, cresyl diphenyl phosphate, bisphenol-A bis(diphenyl phosphate), triethyl phosphate, and triphenyl phosphate. The phosphate ester flame retardant is specifically the bicyclic phosphate. The bicyclic phosphate has a low melting point, has good compatibility with thermoplastic resins such as polyamide elastomer, polyurethane elastomer, and polyamide, has a transparent appearance, and has small impact on the transparency of the thermoplastic resin.

In some embodiments, the weight percentage of the phosphate ester flame retardant is typically but not limited to 10%, 13%, 15%, 17%, 19%, or 20%. By adding a small amount of the phosphate ester flame retardant, the halogen-free flame-retardant effect of the transparent thermoplastic resin can be significantly improved.

In some embodiments, the nano flame retardant includes a nano-organophosphate salt flame retardant which may be specifically an organic hypophosphite salt flame retardant, and includes at least one of aluminum diethyl phosphinate, aluminum methylethyl phosphinate, and aluminum dimethyl phosphinate. The organic hypophosphite salt flame retardant has a small particle size and is a nano-scale particle, has small impact on the transparency of the transparent thermoplastic resin, has a good dispersibility, and can be evenly distributed in the transparent thermoplastic resin, thereby reducing a risk of flame retardant aggregation and improving a flame-retardant effect and mechanical performance. In addition, the organic hypophosphite salt flame retardant can form a glass-like cover layer or a stable foam cover layer at a high temperature, so that a total quantity of isolation substances formed during combustion can be increased, and the flame-retardant effect can be further improved. In addition, adding of the organic hypophosphite salt flame retardant can further reduce an amount of the phosphate ester flame retardant, to further reduce an acidity of the resin composition, reduce a risk of hydrolysis of the transparent thermoplastic resin in a high temperature and high humidity condition, and help improve hydrolysis resistance of the protective material.

In some embodiments, an excessively high amount of the nano flame retardant affects the transparency of the thermoplastic resin composition, and an excessively low amount of the nano flame retardant cannot further improve the flame-retardant effect. Therefore, in this application, the nano flame retardant with a weight percentage of 1% to 8% is added. A small amount of the nano flame retardant (specifically, the organic hypophosphite salt flame retardant) is added, so that the amount of the phosphate ester flame retardant can be reduced, and transparency of the protective material can be ensured, to further improve the halogen-free flame-retardant effect and mechanical performance of the protective material. The weight percentage of the nano flame retardant is typically but not limited to 2%, 2.5%, 3%, 3.5%, 4%, 4.5%, 5%, 5.5%, 6%, 6.5%, 7%, 7.5%, or 8%.

In embodiments of this application, flame retardancy is performed on the transparent thermoplastic resin (for example, the transparent polyamide elastomer). The used halogen-free composite flame retardant is a compound system of the phosphate ester flame retardant and the nano flame retardant (specifically, is aluminum diethyl phosphinate). The compound system includes a carbon source, an acid source, and a gas source. A specific flame-retardant mechanism is as follows: First, during combustion, the halogen-free composite flame retardant decomposes and catalyzes dehydration of the transparent thermoplastic resin to form a carbon layer. Second, the phosphate ester flame retardant reacts with oxygen and water to form phosphoric acid during the combustion. The phosphoric acid is polymerized to form polyphosphoric acid and polymetaphosphoric acid. The polyphosphoric acid and the polymetaphosphoric acid can be attached to a surface of the carbon layer of the transparent thermoplastic resin to isolate the oxygen and prevent flammable material overflow. Third, during combustion, the halogen-free composite flame retardant decomposes to generate phosphoroxy radicals (PO·), the transparent thermoplastic resin decomposes to form a small quantity of hydrogen radicals (H·) and hydroxy radicals (HO·), and the phosphoroxy radicals (PO·) can capture the hydrogen radicals (H·) and the hydroxy radicals (HO·) to form an HPO refractory gas. In this way, further extension of a combustion chain reaction is prevented or slowed down, and an objective of the flame retardancy is achieved. Fourth, the halogen-free composite flame retardant decomposes at a high temperature to generate refractory gases such as P, PO, and HPO, thereby reducing a concentration of flammable gases, so that spreading of the flame can be delayed, and the objective of the flame retardancy can be achieved. In addition, after an organic aluminum hypophosphite flame retardant is added to a combustible material, the organic aluminum hypophosphite flame retardant can form a glass-like cover layer or a stable foam cover layer at a high temperature, and the formed glass-like cover layer or the stable foam cover layer has functions of heat insulation, oxygen insulation, and preventing the flammable gas from escaping outward, thereby achieving the objective of the flame retardancy. In other words, on a basis that the transparent thermoplastic resin dehydrates to form the carbon layer, the organic aluminum hypophosphite flame retardant can generate a new isolation material at a specific temperature, which can increase a total amount of the isolation material and further improve the flame-retardant effect of the halogen-free composite flame retardant. In addition, introduction of the organic aluminum hypophosphite can further reduce the amount of the phosphate ester flame retardant, to reduce the acidity of the thermoplastic resin composition, so that the risk of the hydrolysis of the transparent thermoplastic resin in the high temperature and high humidity condition can be reduced, and hydrolysis resistance of the protective material prepared from the thermoplastic resin composition can further be improved.

In some embodiments, the auxiliary may include but is not limited to at least one of a nano filler (for example, nano silicon dioxide), a toughener, a heat stabilizer, a metal passivator, a free radical scavenger, carbon black, an antioxidant, an acid scavenger, an anti-UV agent, and an antifungal agent. Adding the auxiliary having different functions can improve corresponding performance of the thermoplastic resin. For example, adding the nano silicon dioxide can improve mechanical performance of the thermoplastic resin composition, adding the antioxidant can improve antioxidation performance of the protective material formed by the resin composition, adding the anti-UV agent can absorb ultraviolet light, to improve an ultraviolet resistance capability of the protective material, and the like.

In this application, the phosphate ester flame retardant and the nano flame retardant are compounded. The formed halogen-free composite flame retardant has good compatibility with the transparent thermoplastic resin, and does not affect a light transmittance of the transparent thermoplastic resin when ensuring excellent flame retardant performance of the transparent thermoplastic resin. The protective material prepared by using the thermoplastic resin composition can pass the V-0 level in vertical burning (UL-94, 1.5 mm to 2 mm thick sample strip), and when a thickness of the protective material is within a range of 0.2 mm to 0.5 mm, the light transmittance is greater than or equal to 50%, which can meet a use requirement of a product that has a requirement on the light transmittance. Therefore, the protective material prepared by using the thermoplastic resin composition has a good halogen-free flame-retardant effect, and high heat resistance, hydrolysis resistance, mechanical performance, and transparency.

A method for preparing the protective material by using the foregoing halogen-free flame-retardant transparent thermoplastic resin composition is as follows: First, high-speed premixing is performed on raw materials other than the phosphate ester flame retardant in the foregoing halogen-free flame-retardant transparent thermoplastic resin composition. Then, the premixed raw material is cut and mixed in a twin-screw extruder with multi-segment heating. In a mixing process, the phosphate ester flame retardant is added to the thermoplastic resin composition dropwise. Finally, the material is extruded and granulated to obtain plastic particles (namely, protective material particles). Specifically, steps such as melting and mixing, extrusion, cooling, cutting, sieving, and drying are included, and a melting and extrusion temperature is 190°C to 250°C. The formed protective material particles can be directly used.

When the thickness of the protective material formed by using the foregoing halogen-free flame-retardant transparent thermoplastic resin composition is within a range of 0.2 mm to 0.5 mm, the light transmittance is greater than or equal to 50%, and a requirement of the protective material such as an invisible optical cable on the light transmittance can be met. Tensile breaking strength of the protective material is greater than or equal to 17 MPa, elongation at break is 100% to 600%, and the protective material has high mechanical strength. Based on an ISO 868 standard, Shore hardness can reach 30 D to 70 D by using different transparent thermoplastic resins. In addition, the protective material can pass the V-0 level in vertical burning (UL-94, 1.5 mm to 2 mm thick sample strip), and the optical cable using this protective material can pass a flame retardant test in vertical burning IEC 60332-1-2.

The protective material in this application may be used in an optical cable or another product that has a high requirement on the transparency and the flame-retardant performance. In embodiments of this application, application of the protective material is studied by using an optical cable as an example.

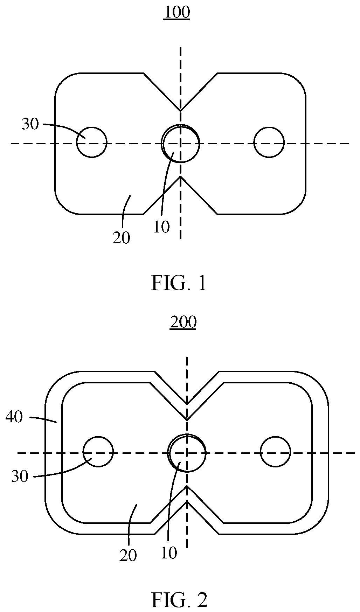

An embodiment of this application further provides an optical cable using the protective material. As shown in FIG. 1, an optical cable 100 includes a fiber core 10 and a protective layer 20 covering an outer side of the fiber core 10, and the protective layer 20 is formed by the foregoing protective material.

A specific method for preparing the optical cable 100 is as follows:

The foregoing protective material particles are extruded from the fiber core 10 together for molding. An extruder performs heating in a plurality of segments, and a heating temperature is within a range of 190°C to 250°C. The extruder is a single-screw extruder having an extruder or a tube extruder, a compression ratio thereof is 2.2 to 3.5, and L/D is 20 to 30. In the formed optical cable 100, the outer surface of the fiber core 10 is covered by an insulating transparent protective layer 20.

The optical cable 100 further includes at least one reinforcing member 30, and each reinforcing member 30 is embedded in the protective layer 20 and is isolated from the fiber core 10. By embedding the reinforcing member 30 in the protective layer 20, tensile breaking strength of the optical cable 100 can be further improved.

In some embodiments, the optical cable 100 includes at least two reinforcing members 30, and the at least two reinforcing members 30 are disposed on two opposite sides of the fiber core 10. By disposing the reinforcing members 30 on the two opposite sides of the fiber core 10, forces on the two opposite sides of the fiber core 10 can be distributed more evenly, thereby further improving a tensile breaking force of the optical cable 100. In this embodiment, there are two reinforcing members 30, and one reinforcing member 30 is separately disposed on either of the two opposite sides of the fiber core 10, so that a final tensile breaking force of the optical cable exceeds 150 N, and a quantity of the reinforcing member 30 is reduced.

In some embodiments, the reinforcing member 30 is a glass fiber, a diameter of the glass fiber ranges from 100 µm to 300 µm, and further ranges from 200 µm to 250 µm. The diameter of the glass fiber is typically but not limited to 100 µm, 150 µm, 200 µm, 250 µm, or 300 µm. The reinforcing member 30 is an uncolored glass fiber. The glass fiber has a very small size and good transparency, and does not affect overall transmittance of the optical cable 100.

In some embodiments, the optical cable 100 may be a butterfly optical cable.

It may be understood that the optical cable 100 may further include another coating layer (for example, an insulating isolation layer, which is not shown in the figure) between the fiber core 10 and the protective layer 20, where the coating layer is of a flammable material.

Based on the light transmittance of the foregoing protective material, when the thickness of the protective layer 20 is within a range of 0.2 mm to 0.5 mm, the light transmittance is greater than or equal to 50% at a wavelength of 550 nm, which can meet a use requirement of an invisible optical cable used in FTTR. The tensile breaking force of the optical cable 100 is greater than or equal to 150 N, a safety tensile force is 18 N (0.6% fiber strain), and a loss at an exposed corner is 0.55 dB to 1.1 dB (a radius of the exposed corner is 3 mm to 5 mm). In a flame-retardant performance test of the formed optical cable 100, because the protective material used by the protective layer 20 has excellent halogen-free flame-retardant performance, the optical cable 100 can pass a flame-retardant test in vertical burning IEC 60332-1-2. Therefore, in this application, the protective layer 20 prepared by using the foregoing halogen-free flame-retardant transparent thermoplastic resin composition is used, and a use requirement of the invisible optical cable used in the FTTR can be met.

The optical cable 100 may include an optical cable with an adhesive and an optical cable without an adhesive depending on whether an outer surface of the optical cable 100 has an adhesive. A structure of the optical cable without an adhesive is similar to that of the foregoing optical cable 100, and the protective layer 20 may be formed on the outer surface of the fiber core 10. In this case, in a cabling process, the optical cable 100 is fastened to a working surface (for example, a wall) by using a nail or an adhesive.

As shown in FIG. 2, another embodiment of this application provides another optical cable 200. A difference between the optical cable 200 and the optical cable 100 in the foregoing embodiment lies in that the optical cable 200 includes the optical cable 100 and an adhesive layer 40 located on an outer surface of the protective layer 20. In other words, the outer surface of the optical cable 100 originally carries an adhesive, and has a self-adhesive capability, which facilitates construction operations.

A material of the adhesive layer 40 is at least one of a transparent polyurethane hot melt adhesive, a transparent polyester hot melt adhesive, a transparent polyolefin hot melt adhesive, or a transparent ethylene-vinyl acetate hot melt adhesive.

A specific molding method for the optical cable 200 with the adhesive is as follows: First, the optical cable 100 is extruded for molding by using the foregoing method, and then the optical cable 100 with the hot melt adhesive are extruded and molded, to form the adhesive layer 40 on the surface of the protective layer 20 to obtain the optical cable 200. In a process of forming the adhesive layer 40 on the outer surface of the optical cable 100, the optical cable needs to experience a high temperature (generally a melting point of the hot melt adhesive, approximately 180°C). If the melting point of the protective layer is low, the optical cable cannot be extruded and molded again. Therefore, in this application, the protective material prepared by using the halogen-free flame-retardant transparent thermoplastic resin composition is used. This can effectively improve a melting and mixing temperature of the protective layer 20. In this way, the protective layer 20 does not deform at a high temperature of 180°C, thereby improving structural stability of the formed optical cable 200.

Structural composition of the optical cable 100 in this application includes a fiber core 10, an efficient halogen-free flame-retardant protective layer 20 (transparent and light colored), and a plurality of reinforcing members 30 (glass fibers). The optical cable 200 further includes an adhesive layer 40 (hot melt adhesive). In the foregoing composition, the halogen-free flame-retardant protective layer 20 has a flame-retardant effect, other functional layers (for example, an insulating isolation layer) on surfaces of the fiber core 10 and the reinforcing member 30 are flammable, the fiber core 10 and the reinforcing member 30 are non-flammable, and the adhesive layer 40 (hot melt adhesive) is flammable. Therefore, to implement overall flame retardancy of the optical cable 100 (or 200), the protective layer 20 need to have high flame-retardant efficiency, and occupy a specific proportion in the optical cable 100 (or 200). The halogen-free flame-retardant protective layer 20 in this application can form a carbonized layer during combustion. The carbonized layer can well isolate heat and flammable gases, and prevent a flame from spreading to another internal functional layer and another adhesive layer, thereby endowing the optical cable 100 (or 200) with good flame-retardant performance as a whole. Therefore, two important factors that define the flame-retardant effect of the optical cable 100 (or 200) are respectively flame-retardant efficiency of the protective material used for the protective layer 20 and a volume proportion of the flame-retardant protective layer 20 in the optical cable 100 (or 200).

In this application, the foregoing protective material has an excellent flame-retardant effect. A 1.5 mm to 2 mm thick protective material sample strip can pass the UL-94 V-0 level in a flame-retardant test on the protective material alone. Based on this, the applicant further studies impact of the volume proportion of the protective layer 20 in the optical cable 100 (or 200) on the overall flame-retardant effect of the optical cable 100 (or 200). It is found through research that when a volume of the protective layer 20 accounts for 40% to 80% of a total volume of the optical cable 100 (or 200), a good overall flame-retardant effect can be achieved for the optical cable 100 (or 200). A volume proportion of the protective layer 20 is further 50% to 70%, and the volume proportion of the protective layer 20 is typically but not limited to 40%, 45%, 50%, 55%, 60%, 65%, 70%, 75%, or 80%. It may be understood that, when the outer adhesive layer 40 is not disposed on the optical cable, the volume proportion of the protective layer 20 is correspondingly increased, and the flame-retardant effect is better than that of disposing the adhesive layer 40. Therefore, impact of the volume proportion of the protective layer 20 in the optical cable on the flame-retardant performance of the optical cable with the adhesive layer 40 is mainly studied herein.

The optical cable 100 (or 200) prepared in this application has good transparency, heat resistance, hydrolysis resistance, and yellowing resistance, and further has excellent tensile and pressure resistance, and a tensile breaking force exceeds 150 N. The optical cable 100 (or 200) is compatible with both an exposed cabling mode and a concealed cabling mode. The optical cable has features of invisibility and aesthetics when using exposed cabling, and has a low friction force when cabled through a pipe.

The optical cable 100 (or 200) has a good halogen-free flame retardant effect, and can pass a flame retardant test in vertical burning IEC 60332-1-2. In addition, an increase of the flame retardant in the protective material does not affect the transparency of the thermoplastic resin, so that a use requirement of the invisible optical cable used in the FTTR can be met.

A melting point of the halogen-free flame-retardant protective material used for the protective layer 20 is higher than 200°C. Therefore, the optical cable 100 can be reprocessed at a high temperature over 180°C to form the optical cable 200 with the adhesive layer 40.

The following further describes the protective material and the optical cable prepared by using the protective material in this application in detail with reference to specific embodiments and comparative examples.

### Preparation example 1

Step 1: Weigh the following raw materials based on added amounts of each component in Table 1:
a commercially available transparent polyamide elastomer with hardness of 30 D to 70 D;
a phosphate ester flame retardant, specifically a cyclic phosphate ester flame retardant, whose model is BOP or COP;
a nano flame retardant: aluminum diethyl phosphinate, whose model is Clariant OP 1230 or OP 930;
an antioxidant: an antioxidant 1010 and an antioxidant 168; and
an anti-UV agent: UV 325.

Step 2: First, components other than the phosphate ester flame retardant in the foregoing components are premixed at a normal temperature and a high speed, to obtain a mixture.

Step 3: Place the mixture in a single/twin-screw extruder, and add the phosphate ester flame retardant to the mixture dropwise when extruding, where under functions of heating (a heating temperature is 190°C to 250°C) and shearing, the mixture is further mixed evenly, and extrude, cool, and granulate the components to form a granular plastic material (namely, the protective material).

Specific synthesis methods of preparation examples 2 and 3 and comparative preparation examples 1 and 2 differ from the preparation example 1 in components and ratios. For specific components, refer to Table 1. For other conditions, refer to synthesis example 1. The polyurethane elastomer is the commercially available transparent polyurethane elastomer with hardness of 90 A to 95 A.

For formula parameters of preparation example 1 to preparation example 3 and comparative preparation example 1 and comparative preparation example 2, refer to Table 1. For related performance parameters, refer to Table 2.

**Table 1**

| Component | Preparation example 1 | Preparation example 2 | Preparation example 3 | Comparative preparation example 1 | Comparative preparation example 2 |
|---|---|---|---|---|---|
| Polyamide elastomer | 81% | 0% | 83% | 78% | 0% |
| Polyurethane elastomer | 0% | 77% | 0% | 0% | 88% |
| Phosphate ester flame retardant (Cyclic phosphate ester flame retardant) | 10% | 20% | 10% | 20% | 0% |
| Nano flame retardant (OP 1230) | 6% | 0% | 0% | 0% | 0% |
| Nano flame retardant (OP 930) | 1% | 1% | 3% | 0% | 10% |
| Nano silicon dioxide | 0% | 0% | 2% | 0% | 0% |
| Antioxidant | 0.5% | 0.5% | 0.5% | 0.5% | 0.5% |
| Anti-UV agent | 0.5% | 0.5% | 0.5% | 0.5% | 0.5% |
| Other auxiliaries | 1% | 1% | 1% | 1% | 1% |

| | | | | | |
|---|---|---|---|---|---|
| Note: The other auxiliaries include a toughener and a heat stabilizer. | | | | | |

For related performance parameters of the preparation example 1 to the preparation example 3, the comparative preparation example 1, and the comparative preparation example 2, refer to Table 2.

**Table 2**

| Performance parameter | Preparation example 1 | Preparation example 2 | Preparation example 3 | Comparative preparation example 1 | Comparative preparation example 2 |
|---|---|---|---|---|---|
| Hardness (Shore) | 61 D | 80 A | 95 A | 45 D | 95 A |
| Tensile breaking strength/MPa | 35 | 17 | 35 | 22 | 24 |
| Elongation at break/% | 403 | 530 | 376 | 486 | 420 |
| UL-94 (1.5 mm to 2 mm thick sample strip) | 2 mm V-0 | 2 mm V-0 | 2 mm V-0 | 3.2 mm V-2 | 3.2 mm V-2 |
| Light transmittance (Light transmittance at 0.2 mm to 0.5 mm and 550 nm) | 55% | 68% | 60% | 80% | 35% |

It can be seen from Table 2 with reference to the preparation examples 1 to 3 in Table 1 that, by compounding the phosphate ester flame retardant and the aluminum diethyl phosphinate, when a small amount of the phosphate ester flame retardant is added, the formed halogen-free composite flame retardant has the good flame-retardant effect, and a 2 mm-thick sample strip prepared by using the thermoplastic resin composition can pass the UL-94 V-0 level. However, with an increase of added amount of the nano flame retardant, the transparency of the thermoplastic resin composition is reduced, but is still greater than 50%, which meets the use requirement of the FTTR invisible optical cable. However, in comparative preparation examples 1 and 2, the phosphate ester flame retardant and the nano flame retardant are respectively added alone, and the flame-retardant performance can only pass the UL-94 (3.2 mm thick sample strip) V-2 level, and cannot meet the flame-retardant performance requirement of the FTTR optical cable. In addition, in the comparative preparation example 2, because a large amount of the nano flame retardant (a weight percentage is 10%) is added, the transparency of the thermoplastic resin is severely affected (the light transmittance is only 35%), the requirement of the FTTR invisible optical cable cannot be met. In addition, it can be seen from the preparation examples 1 to 3 that, with the increase of the nano flame retardant, the tensile breaking strength of the thermoplastic resin composition increases. Therefore, in this application, the phosphate ester flame retardant and the nano flame retardant are compounded to form the halogen-free composite flame retardant, so that the thermoplastic resin can have excellent halogen-free flame-retardant performance and mechanical performance when ensuring a good light transmittance.

### Embodiment 1

The protective material prepared in Embodiment 1, two 250 µm uncolored optical fibers as reinforcing members, and one 0.25 mm uncolored optical fiber as a communication fiber core are extruded and molded by using a single-screw extruder, and are coiled to obtain a halogen-free flame-retardant transparent FTTR optical cable without an adhesive. The optical cable includes a coating layer between a fiber core and a protective layer, and a material of the coating layer is an insulating heat insulation layer formed by an insulating isolation polymer.

### Embodiment 2

The halogen-free flame-retardant transparent FTTR optical cable without an adhesive in Embodiment 1 and a hot melt adhesive are jointly extruded and molded, so that a halogen-free flame-retardant transparent FTTR optical cable with an adhesive is prepared.

### Embodiment 3

A difference between Embodiment 3 and Embodiment 1 lies in that a halogen-free flame-retardant transparent FTTR optical cable without adhesive is prepared by using the protective material in Embodiment 2.

### Embodiment 4

The halogen-free flame-retardant transparent FTTR optical cable without an adhesive in Embodiment 3 and a hot melt adhesive are jointly extruded and molded, so that a halogen-free flame-retardant transparent FTTR optical cable with an adhesive is prepared.

### Embodiment 5

A difference between Embodiment 5 and Embodiment 1 lies in that the halogen-free flame-retardant transparent FTTR optical cable without adhesive is prepared by using the protective material in Embodiment 3.

### Embodiment 6

The halogen-free flame-retardant transparent FTTR optical cable without an adhesive in Embodiment 5 and a hot melt adhesive are jointly extruded and molded, so that a halogen-free flame-retardant transparent FTTR optical cable with an adhesive is prepared.

### Comparative example 1

A difference between the comparative example 1 and Embodiment 1 lies in that an FTTR optical cable without an adhesive is prepared by using the protective material of the comparison preparation example 1.

### Comparative example 2

The halogen-free flame-retardant transparent FTTR optical cable without an adhesive in the comparative example 1 and a hot melt adhesive are jointly extruded and molded, so that a halogen-free flame-retardant transparent FTTR optical cable with an adhesive is prepared.

### Comparative example 3

A difference between Embodiment 3 and Embodiment 1 lies in that an FTTR optical cable without an adhesive is prepared by using the protective material in Embodiment 2.

### Comparative example 4

The halogen-free flame-retardant transparent FTTR optical cable without an adhesive in the comparative example 3 and a hot melt adhesive are jointly extruded and molded, so that a halogen-free flame-retardant transparent FTTR optical cable with an adhesive is prepared.

For structural proportions of optical cables in Embodiment 1 to Embodiment 6 and in the comparative example 1 to the comparative example 4, refer to Table 3.

**Table 3**

| | Fiber core volume proportion | Coating layer volume proportion | Protective layer volume proportion | Adhesive layer volume proportion | Quantity of reinforcing members |
|---|---|---|---|---|---|
| Embodiment 1 | 4.38% | 13.14% | 82.26% | 0% | 2 |
| Embodiment 2 | 3.2% | 9.6% | 60.1% | 27.1% | 2 |
| Embodiment 3 | 4.38% | 13.14% | 82.26% | 0% | 2 |
| Embodiment 4 | 3.2% | 9.6% | 60.1% | 27.1% | 2 |
| Embodiment 5 | 4.38% | 13.14% | 82.26% | 0% | 2 |
| Embodiment 6 | 3.2% | 9.6% | 60.1% | 27.1% | 2 |
| Comparative example 1 | 4.38% | 13.14% | 82.26% | 0% | 2 |
| Comparative example 2 | 3.2% | 9.6% | 60.1% | 27.1% | 2 |
| Comparative example 3 | 4.38% | 13.14% | 82.26% | 0% | 2 |
| Comparative example 4 | 3.2% | 9.6% | 60.1% | 27.1% | 2 |

Performance parameters of the optical cables in Embodiment 1 to Embodiment 6 and in the comparative example 1 to the comparative example 4 are shown in Table 4.

**Table 4**

| Performance parameter | Tensile breaking force | Invisibility | Vertical burning (IEC 60332-1-2) | Does the optical cable have self-adhesive capability? |
|---|---|---|---|---|
| Embodiment 1 | 157 N | Excellent | Pass | No |
| Embodiment 2 | 165 N | Excellent | Pass | Yes |
| Embodiment 3 | 154 N | Excellent | Pass | No |
| Embodiment 4 | 158 N | Excellent | Pass | Yes |
| Embodiment 5 | 154 N | Excellent | Pass | No |
| Embodiment 6 | 163 N | Excellent | Pass | Yes |
| Comparative example 1 | 143 N | Excellent | Fail | No |
| Comparative example 2 | 146 N | Excellent | Fail | Yes |
| Comparative example 3 | 151 N | Poor | Fail | No |
| Comparative example 4 | 156 N | Poor | Fail | Yes |

It can be seen from Table 3 and Table 4 that, in Embodiments 1 to 6, the protective material prepared in this application is used as the protective layer of the optical cable, and the light transmittance, the flame-retardant performance, and the tensile breaking force of a finished optical cable can all meet a use requirement of the FTTR invisible optical cable. However, the flame-retardant performance of the comparative examples 1 to 4 is poor, and cannot pass a vertical burning test, and cannot meet the use requirement of the flame-retardant performance of the FTTR optical cable. In addition, a large amount of the nano flame retardant is added to the protective layers in the comparative examples 3 and 4, and consequently, the light transmittance is severely affected and cannot meet the use requirement of the FTTR invisible optical cable. In addition, outermost layers of the optical cables in Embodiment 2, Embodiment 4, Embodiment 6, the comparative example 2, and the comparative example 3 are all formed with adhesive layers. Therefore, all the optical cables have the self-adhesive capability, which is convenient for cabling construction.

It should be noted that the foregoing are only specific implementations of this application, but the protection scope of this application is not limited thereto. Any change or replacement readily figured out by a person skilled in the art within the technical scope disclosed in this application shall fall within the protection scope of this application. In a case of no conflict, features in the implementations and the implementations of this application may be mutually combined. Therefore, the protection scope of this application shall be subject to the protection scope of the claims.

## Claims

1. A thermoplastic resin composition, comprising the following components in weight percentage:
| | |
|---|---|
| a transparent thermoplastic resin | 72% to 85%; |
| a phosphate ester flame retardant | 10% to 20%; |
| a nano flame retardant | 1% to 8%; and |
| an auxiliary | 0.1% to 2%. |

2. The thermoplastic resin composition according to claim 1, wherein the transparent thermoplastic resin comprises at least one of a transparent polyamide elastomer, a transparent polyurethane elastomer, a transparent thermoplastic polyester elastomer, and transparent polyethersulfone.

3. The thermoplastic resin composition according to claim 2, wherein the transparent thermoplastic resin is the transparent polyamide elastomer.

4. The thermoplastic resin composition according to any one of claims 1 to 3, wherein the phosphate ester flame retardant comprises at least one of bicyclic phosphate, beta-methyl vinyl phosphate, cresyl diphenyl phosphate, bisphenol-A bis(diphenyl phosphate), triethyl phosphate, and triphenyl phosphate.

5. The thermoplastic resin composition according to any one of claims 1 to 4, wherein the nano flame retardant comprises a nano-organophosphate salt flame retardant.

6. The thermoplastic resin composition according to claim 5, wherein the nano-organophosphate salt flame retardant comprises at least one of aluminum diethyl phosphinate, aluminum methylethyl phosphinate, and aluminum dimethyl phosphinate.

7. A protective material, wherein the protective material is prepared by heating and mixing the thermoplastic resin composition according to any one of claims 1 to 6.

8. The protective material according to claim 7, wherein a heating temperature is 190°C to 250°C.

9. The protective material according to claim 7 or 8, wherein when a thickness of the protective material is within a range of 0.2 mm to 0.5 mm, a light transmittance is greater than or equal to 50%, Shore hardness of the protective material is 30 D to 70 D, a tensile breaking strength of the protective material is greater than or equal to 17 MPa, and elongation at break is 100% to 600%.

10. An optical cable, comprising a fiber core and a protective layer covering an outer side of the fiber core, wherein the protective layer is prepared by using the protective material according to any one of claims 7 to 9.

11. The optical cable according to claim 10, wherein the optical cable further comprises an adhesive layer covering an outer side of the protective layer.

12. The optical cable according to claim 10 or 11, wherein a volume of the protective layer accounts for 40% to 80% of a total volume of the optical cable.

13. The optical cable according to any one of claims 10 to 12, wherein the optical cable further comprises at least one reinforcing member, and each reinforcing member is embedded in the protective layer and is isolated from the fiber core.

14. The optical cable according to claim 13, wherein the optical cable comprises at least two reinforcing members, and the at least two reinforcing members are disposed on two opposite sides of the fiber core.

15. The optical cable according to claim 14, wherein the reinforcing member is a glass fiber, and a diameter of the glass fiber ranges from 100 µm to 300 µm.

16. The optical cable according to any one of claims 10 to 15, wherein a tensile breaking force of the optical cable is greater than or equal to 150 N.
